# EUROPÄISCHE PATENTSCHRIFT

(11) **EP 2 050 173 B1**
(45) Veröffentlichungstag und Bekanntmachung des Hinweises auf die Patenterteilung: **17.12.2014**
(21) Anmeldenummer: 07788041.7
(22) Anmeldetag: 30.07.2007
(51) Int. Cl.: H02B 13/045

(54) **GEHÄUSEANORDNUNG MIT EINER GRUNDFLÄCHE**
HOUSING ARRANGEMENT WITH A BASE
ENSEMBLE BOITIER AVEC UNE SURFACE DE BASE

(30) Priorität: 09.08.2006 DE 102006038262
(43) Veröffentlichungstag der Anmeldung: 22.04.2009
(73) Patentinhaber: Siemens Aktiengesellschaft, 80333 München (DE)
(72) Erfinder: GUENTHER, Rene, 13591 Berlin (DE); MEINHERZ, Manfred, 13467 Berlin (DE); TIETZE, Jörg, 13591 Berlin (DE)
(86) Internationale Anmeldenummer: PCT/EP2007/057840
(87) Internationale Veröffentlichungsnummer: WO 2008/017607

(56) Entgegenhaltungen:
- EP-A2- 0 843 395
- US-A- 4 688 143
- US-A- 4 821 143

## Beschreibung

Die Erfindung bezieht sich auf eine Gehäuseanordnung mit einer von einer oder mehrere Seitenwänden begrenzten Grundfläche, die ein abnehmbarer Deckel zumindest teilweise überspannt, wobei der Deckel eine Anformung aufweist, welche eine Seitenwand zumindest teilweise bildet und der Deckel eine Aufsetzfläche aufweist, welche in einer Ebene liegt und mit einer Hochachse, die von der oder den Seitenwänden umgeben ist.

Eine derartige Gehäuseanordnung ist beispielsweise aus der europäischen Patentanmeldung EP 0 843 395 A2 bekannt. Dort ist eine Grundfläche an einem Kapselungsgehäuse einer gasisolierten metallgekapselten Schaltanlage angeordnet. Die dortige Gehäuseanordnung weist mehrere Seitenwände auf, die im Wesentlichen eine rechteckige Form der Grundfläche abgrenzen. Die Grundfläche ist dabei von einem Deckel überspannt. Gemäß einer Ausgestaltungsvariante ist aus der EP 0 834 395 A2 bekannt, die Seitenwände vollständig an den Deckel anzuformen, so dass eine haubenartige Konstruktion entsteht, welche auf einen umlaufenden Steg aufgesetzt wird.

Dies weist den Vorteil auf, dass nach einem Entfernen des dortigen haubenförmigen Deckels die Einbauten auch seitlich gut zugänglich sind.

Diese Konstruktion weist jedoch den Nachteil auf, dass zum Abnehmen des Deckels der Deckel vollständig samt der angeformten Seitenwände über die Einbauten zu heben ist, um diesen zu entfernen. Ein seitliches Herausschieben des Deckels, wie es beispielsweise bei einer Ausgestaltung des Deckels als im Wesentlichen ebene Platte möglich ist, ist bei einer haubenartigen Gestalt des Deckels nicht möglich. Dadurch ist der Einsatz von haubenartigen Deckeln in überbauten engen Bereichen kaum möglich.

Ein ebener Deckel weist jedoch den Nachteil auf, dass auch bei abgenommenem Deckel Einbauten durch Seitenwände verdeckt sind und ein seitlicher Zugang kaum möglich ist.

Aus den Dokumenten US 4,821,143 sowie US 4,688,143 sind Gehäuseanordnungen bekannt, welche Deckel aufweisen. Die Deckel sind auch mit seitlichen Anformungen ausgestattet. Die in den Dokumenten vorgeschlagenen Deckel sind jeweils schwenkbeweglich angeordnet, so dass für einen Zugang zu im Inneren der Gehäuse angeordneten Vorrichtungen ein Ausschwenken der Deckel nötig ist. Derartige Gehäuseanordnungen benötigen entsprechend groß dimensionierte Schwenkbereiche, um ein problemloses Öffnen der Gehäuseanordnung durch ein Schwenken eines Deckels vorzunehmen.

Aufgabe der Erfindung ist es daher, eine Gehäuseanordnung anzugeben, welche auch in überbauten engen Bereichen ein Öffnen der Gehäuseanordnung bei verbesserter seitlicher Zugänglichkeit der Einbauten der Gehäuseanordnung zu öffnen ist.

Erfindungsgemäß wird dies bei einer Gehäuseanordnung der eingangs genannten Art dadurch gelöst, dass zwischen der Hochachse und der Ebene der Aufsetzfläche ein Winkel kleiner 90° eingeschlossen ist und durch die Anformung ein Bedienelement und/oder ein Anzeigeelement zugänglich sind/ist.

Das Vorsehen einer in einer Ebene liegenden Aufsetzfläche des Deckels ermöglicht es, einfache Fertigungsverfahren zur Anwendung zu bringen, um die Aufsetzfläche zu bearbeiten. Ebenso ist die gegengleiche Aufnahmefläche zu der Aufsetzfläche ebenfalls entsprechend einfach zu bearbeiten. Weiterhin ermöglicht die ebene Ausgestaltung der Aufsetzfläche das Einsetzen von Dichtungen, welche sich in einer Ebene erstrecken. So können beispielsweise entsprechend dimensionierte O-Ringe bei einer kreisförmigen Grundfläche mit einer umlaufenden Seitenwand eingesetzt werden. Da im Regelfall die Gehäuseanordnungen mit ihren Grundfläche und Seitenwänden sowie Deckeln im Wesentlichen lotrecht zueinander angeordnet sind, ist durch den Einschluss eines Winkels kleiner als 90° zwischen der Ebene in welcher die Aufsetzfläche liegt und der Hochachse, in deren Richtung regelmäßig der Deckel gegen die Grundfläche gepresst ist, eine schräge Ebene durch die Gehäuseanordnung gewählt. Beispielsweise kann bei einer quaderförmigen Gestalt der Gehäuseanordnung bei einer entsprechenden schrägen Lage der Ebene in einer seitlichen Ansicht die Gehäuseanordnung in zwei Körper mit im Wesentlichen dreieckigen Flächen zerlegt werden. Bei einer rechteckigen Grundfläche kann es beispielsweise vorgesehen sein, dass zwei einander gegenüberliegende Seitenwände jeweils zu einem größeren Teil an dem Deckel bzw. an der Grundfläche angeformt sind, und die die beiden gegenüberliegenden Flächen verbindenden Seitenwände jeweils hälftig aus Anformungen des Deckels und Anformungen an der Grundfläche gebildet sind. Dabei kann ein stetiger Verlauf des Übergangs der zur Bildung der Seitenflächen eingesetzten Anformungen vorgesehen sein.

Die Hochachse ist eine Achse, die im Wesentlichen lotrecht zu einer im Wesentlichen ebenen Fläche des Deckels verläuft. Die ebene Fläche überspannt die Grundfläche zumindest zu einem Teil. Die ebene Fläche des Deckels und die Grundfläche sind annähernd parallel zueinander ausgerichtet. Selbst bei einem Abweichen der Grundfläche von einer idealen ebenen Form, beispielsweise gewölbt oder gebogen, liegt die Hochachse lotrecht zu dieser Ebene. Die Hochachse durchstößt jeweils den Deckel und die Grundflächen, wobei die Seitenwände frei von Schnittpunkten mit der Hochachse sind. Bei einem kreisförmigen Querschnitt der Grundfläche verläuft die Hochachse vorzugsweise durch den Kreismittelpunkt. Die umlaufende Seitenwand ist koaxial zu der Hochachse ausgerichtet. Vorzugsweise sollte die Hochachse senkrecht oder waagerecht verlaufen.

Vorteilhaft sollte die Hochachse parallel zumindest zu einer Fläche einer Seitenwand liegen.

Aufgrund der schrägen Lage der Ebene ist es möglich, den Deckel in Richtung des sich öffnenden Winkels bei einem geringen Anheben des Deckels über der Grundfläche diesen im Wesentlichen parallel zur Grundfläche herauszuziehen. Dadurch wird oberhalb der Gehäuseanordnung nur ein geringer Raum benötigt, um den Deckel von der Gehäuseanordnung zu entfernen. Weiterhin weist diese Ausgestaltung der Gehäuseanordnung den Vorteil auf, dass die Einbauten nunmehr zumindest in den Bereichen, in welchen die Seitenwände an den Deckel angeformt sind, seitlich gut zugänglich sind. Dadurch ist es möglich, selbst in beengten Bereichen die Gehäuseanordnung einzusetzen und Einbauten im Innern der Gehäuseanordnung vor äußeren mechanischen Einflüssen zu schützen. Im eingebauten Zustand kann der Deckel entfernt werden, um beispielsweise Servicearbeiten an den Einbauten vorzunehmen. So ist auch eine frontale Zugänglichkeit gegeben.

Weiterhin ist vorgesehen, dass durch die Anformung ein Bedienelement und/oder ein Anzeigeelement zugänglich sind/ist.

Die Gehäuseanordnung dient im Regelfall der Aufnahme von Einbauten. Diese Einbauten können beispielsweise elektronische Komponenten oder auch mechanisch wirkende Komponenten sein. Es kann erforderlich sein, eine Zustandsüberwachung für diese Komponenten vorzusehen, oder auch Bedienhandlungen an den Komponenten vorzunehmen. Bedienelemente können beispielsweise Antriebskurbeln, Schaltstangen oder ähnliches sein, welche durch eine oder mehrere Öffnungen, welche in der Anformung vorgesehen sind, zugänglich sind. Zur Sicherung der Öffnungen können die Öffnungen durch Verschlusselemente verschlossen werden. Im einfachen Fall kann dies eine die Öffnungen verschließende und überdeckende Platte sein, welche mit einem Verschlusselement, beispielsweise einem Schloss, vor unerlaubter Entnahme gesichert ist. Es kann jedoch auch vorgesehen sein, dass selbsttätige Blockierelemente vor eine Ausnehmung gefahren werden oder im Bereich der Anformung vorgesehene Bedienelemente blockiert werden oder in ihrer Wirksamkeit eingeschränkt werden. Beispielsweise können als Bedienelemente Taster oder ähnliches dienen, die nur im Bedarfsfalle freigeschaltet und nur im freigeschalteten Zustand ein Bedienimpuls abgeben können.

Als Anzeigeelement können beispielsweise Schaltstellungsanzeigen, Leuchtmelder oder ähnliches in einer Front der Anformung angeordnet sein. Dabei kann vorgesehen sein, dass Teile der Anformung aus optisch durchlässigen Materialien gefertigt sind, so dass im Inneren der Gehäuseanordnung liegende Anzeigeelemente durch eine Seitenwand hindurch sichtbar sind.

Eine weitere vorteilhafte Ausgestaltung kann vorsehen, dass die Grundfläche Teil einer gasdichten Barriere eines Schaltanlagenkapselungsgehäuses ist.

Gasisolierte Schaltanlagen werden typischerweise in modularer Bauweise errichtet, wobei eine Vielzahl von ähnlichen Feldern benachbart angeordnet werden. Zur Erzeugung einer kompakten Außengestalt einer gasisolierten Schaltanlage stehen nur geringe Zwischenräume zwischen einzelnen Modulen der Felder zur Verfügung. Um beispielsweise Sekundäreinrichtungen wie Meldeschalter, Antriebseinrichtungen usw. anzuordnen, sind an den Schaltanlagen entsprechende Gehäuseanordnungen vorzusehen. Eine Nutzung eines Kapselungsgehäuses als Grundfläche ermöglicht es, zur Verfügung stehenden Raum an einer gasisolierten Schaltanlage effektiver zu nutzen. Gasisolierte Schaltanlagen im Mittel- und Hochspannungsbereich werden mit Druckgas von mehreren bar Überdruck befüllt. Aus diesem Grunde weisen die Kapselungsgehäuse eine ausreichende mechanische Festigkeit auf, um die Belastungen, die von einer Gehäuseanordnung ausgehen, aufzunehmen. Oftmals weisen die Schaltanlagenkapselungsgehäuse kreisförmige Querschnittsformen auf. In diesem Falle ist es vorteilhaft, wenn die Hochachse durch einen Kreismittelpunkt eines kreisförmigen Querschnittes läuft. Es können jedoch auch Rotationsachsen vorgesehen sein, zu welchen Flansche, Rohrabschnitte oder ähnliches rotationssymmetrisch verlaufen. Zu derartigen Rotationsachsen kann die Hochachse vorteilhaft radial ausgerichtet sein.

Vorteilhafterweise kann weiterhin vorgesehen sein, dass ein Teil einer Seitenwand stoffschlüssig mit der Grundfläche verbunden ist.

Durch einen stoffschlüssigen Verbund ist eine Verbindung zwischen Grundfläche und Seitenwand gegeben, die ein Eindringen von Fremdkörpern wirksam verhindert. Als stoffschlüssiges Verbindungsverfahren können beispielsweise Schweißverfahren, Lötverfahren usw. vorgesehen sein. Es kann jedoch auch vorgesehen sein, die Seitenwände mittels eines Gussverfahrens mit der Grundfläche zu verbinden.

Eine weitere vorteilhafte Ausgestaltung kann vorsehen, dass die Grundfläche von einer drehbar gelagerten Antriebswelle durchsetzt ist.

Ein Durchdringen der Grundfläche mit einer Antriebswelle ermöglicht es, eine Bewegung durch die Grundfläche zu übertragen. Dabei ist es vorteilhaft, wenn die Welle gasdicht in dem Gehäuse angeordnet ist. Eine Rotationsachse der Antriebswelle kann vorteilhaft parallel insbesondere deckungsgleich zu der Hochachse liegen. Eine weitere Variante kann vorsehen, die Antriebswelle zu schenken und zur Abdichtung der Welle einen Faltenbalg einzusetzen.

Eine vorteilhafte Ausgestaltung kann weiterhin vorsehen, dass eine von dem Deckel zumindest teilweise gebildete Seitenwand eine ebene Front aufweist, an deren Enden zum Übergang auf anschließende Seitenwände sich jeweils Übergangsabschnitte mit konkaven Wölbungen anschließen.

Eine ebene Front ermöglicht es, beispielsweise Bedienelemente oder Anzeigeelemente strukturiert anzuordnen und diese leicht zugänglich bzw. leicht ablesbar zu gestalten. Durch einen Rücksprung auf sich anschließende Seitenwände kann die Wahrnehmung der ebenen Front zusätzlich unterstützt werden. Weiterhin werden durch die einwärts gewölbten Übergangsabschnitte Bereiche freigeschnitten, in welchen weitere Baugruppen angeordnet werden können. Weiterhin wird die ebene Front aus einer Fläche hervorgehoben, so dass diese separat wahrgenommen werden kann. Trotz der scheinbar separaten Ausgestaltung der ebenen Front ist diese Teil der Gehäuseanordnung.

Eine weitere vorteilhafte Ausgestaltung kann vorsehen, dass auf der Grundfläche Einbauten angeordnet sind, welche über die zur Aufnahme der Aufsetzfläche des Deckels vorgesehene Kontur hinausragen.

Durch das Überragen sind Einbauten im Innern der Gehäuseanordnung nach einer Demontage des Deckels auch seitlich zugänglich. Die Kontur wird beispielsweise durch die gegengleiche Aufnahmefläche begrenzt.

Es kann vorteilhaft weiter vorgesehen sein, dass innerhalb der Gehäuseanordnung eine Antriebseinrichtung angeordnet ist.

Auch eine Antriebseinrichtung kann derart ausgestaltet sein, dass diese über die Kontur der gegengleichen Aufnahmeflächen hinausragt. Dadurch ist es beispielsweise möglich, Wartungsarbeiten oder Messvorgänge bei eingebauter Antriebseinrichtung aus seitlichen Richtungen vorzunehmen. Aufgrund einer engen Feldteilung, wie sie beispielsweise in gasisolierten Schaltanlagen vorgesehen ist, ist ein senkrechter, also ein Zugang von oben, aufgrund von Überdeckungen oft nicht ohne weiteres möglich.

Im Folgenden wird ein Ausführungsbeispiel der Erfindung schematisch in Figuren gezeigt und nachfolgend näher beschrieben. Dabei zeigt die
- Figur 1: eine seitliche Ansicht einer Gehäuseanordnung mit geöffneten Deckel, die
- Figur 2: die aus der Figur 1 bekannte Darstellung mit aufgesetztem Deckel, die
- Figur 3: eine ebene Front mit Anzeigeelementen und die
- Figur 4: eine Draufsicht auf eine Gehäuseanordnung bei entferntem Deckel.

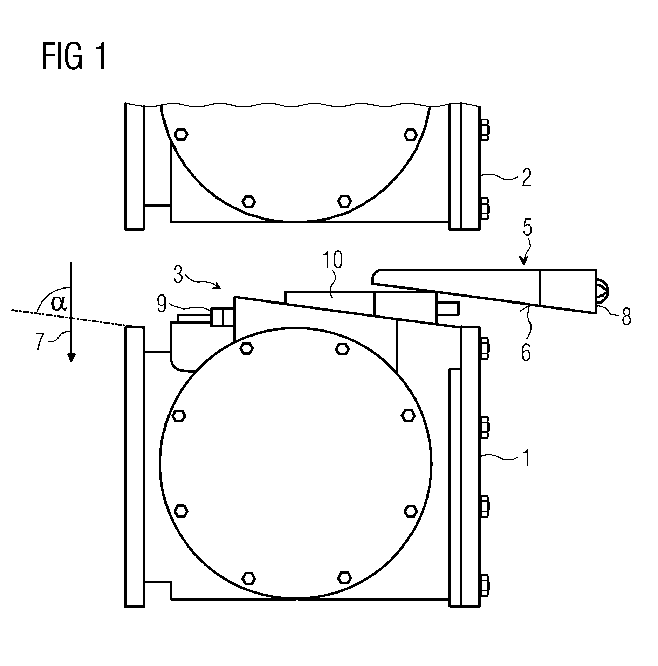

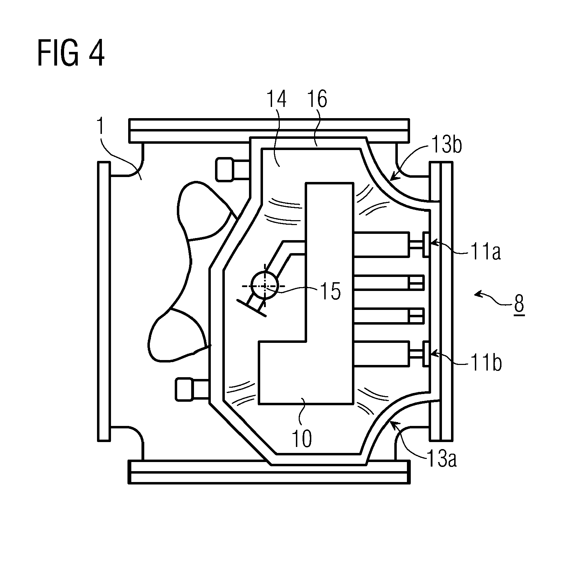

Die Figur 1 zeigt eine seitliche Ansicht eines Kapselungsgehäuses 1 einer gasisolierten Schaltanlage. Das Kapselungsgehäuse 1 weist mehrere Flansche auf, die bedarfsweise mit Blinddeckeln verschließbar sind, oder durch welche sich Verbindungen von Aktivteilen der gasisolierten Schaltanlage führen lassen. Benachbart zu dem Kapselungsgehäuse 1 ist ein weiteres Kapselungsgehäuse 2 angeordnet, welches eine gegenseitige Überdeckung von Kapselungsgehäusen innerhalb einer gasisolierten Schaltanlage schematisch darstellt. Zwischen dem Kapselungsgehäuse 1 und dem weiteren Kapselungsgehäuse 2 ist ein schlitzartiger Hohlraum gebildet, in welchem eine Gehäuseanordnung 3 angeordnet ist. Die Gehäuseanordnung 3 weist eine Grundfläche 14 (vgl. Figur 4) auf, welche im Wesentlichen quer zu der Zeichenebene der Figur 1 angeordnet ist. Die Grundfläche 14 ist von Seitenwänden umgeben.

In der Zeichenebene der Figur 1 ist eine erste Seitenwand 4 dargestellt. Die Gehäuseanordnung 3 weist auf der von dem Betrachter der Figur 1 abgewandten Seite eine gleichartig zu der ersten Seitenwand 4 ausgebildete Seitenwand auf. Auf die Seitenwände ist ein Deckel 5 aufsetzbar. Der Deckel 5 ist im gezeigten Beispiel in geöffneter Position dargestellt. Der Deckel 5 überspannt bei geschlossener Gehäuseanordnung 3 die Grundfläche 14 und weist Anformungen auf, welche einzelne Seitenwände teilweise nahezu vollständig, teilweise nur zu einem Teil ausbilden.

An dem Deckel 5 ist eine Aufsetzfläche 6 vorgesehen. Die Aufsetzfläche 6 ist in einer Ebene angeordnet. Im aufgesetzten Zustand wird der Deckel 5 längs einer Hochachse in Richtung der Grundfläche 14 gegen eine gegengleiche Fläche zu der Aufsetzfläche 6 verspannt. Die Richtung der Hochachse ist in der Figur 1 durch einen Pfeil 7 dargestellt. Zwischen der Hochachse (einer Senkrechten) und der Aufsetzfläche 6 ist ein Winkel α eingeschlossen, welcher kleiner als 90° ist. Dieser Winkel α öffnet sich in Einschubrichtung des Deckels 5. Durch diese Art der Ausgestaltung ergibt sich ein Deckel 5, an welchen an einer Seite eine Seitenwand nahezu vollständig angeformt ist (ebene Front 8) und sich an die ebene Front 8 anschließende Seitenwände (erste Seitenwand 4 und entsprechend vom Betrachter abgewandte Seitenwand) zum Teil aus Anformungen an dem Deckel 5 und zum Teil aus Anformungen an der Grundfläche 4 gebildet sind. In Einschubrichtung des Deckels 5 hinten liegend ist eine Seitenwand zu wesentlichen Teilen an die Grundfläche angeformt. Diese Seitenwand ist dazu vorgesehen, über entsprechende Schnittstellen 9 Kabel und Leitungen etc. in das Innere der Gehäuseanordnung 3 einzuführen. An diese Kabel und Leitungen können im Inneren der Gehäuseanordnung 3 angeordnete Einbauten 10 angeschlossen werden. Als Einbauten sind beispielsweise elektromotorische Antriebseinrichtungen, Meldeeinrichtungen, Steuereinrichtungen usw. vorstellbar.

Wie aus der Figur 1 ersichtlich, ist aufgrund der schrägen Lage einer Schnittebene, in welcher relativ zueinander bewegbare Elemente der Gehäuseanordnung 3 einander berühren, zwischen Deckel und Grundfläche zum einen im geöffneten Zustand des Deckels ein seitlicher Zugang der Einbauten möglich, zum anderen ist zum Entfernen des Deckels 5 nur ein geringes Abheben des Deckels 5 nötig und dieser kann aus dem engen Spalt zwischen den beiden Kapselungsgehäusen 1, 2 entgegen der Einschubrichtung herausgezogen werden. Dadurch ist eine gute seitliche Zugänglichkeit zu den Einbauten gegeben.

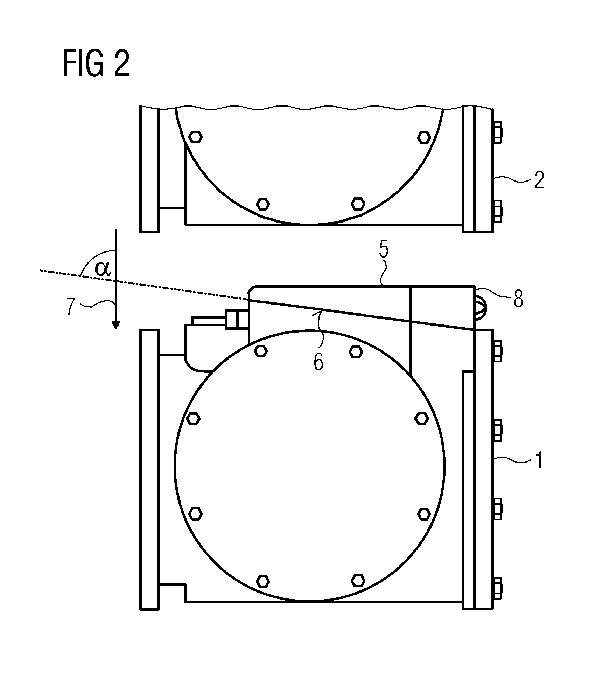

In der Figur 2 ist der Deckel 5 in geschlossenem Zustand dargestellt. Der Deckel 5 ist dabei mit seiner Aufsetzfläche 6 auf die entsprechenden Seitenwandteile aufgesetzt, welche an die Grundfläche 14 angeformt sind. Im Grenzbereich der Aufsetzfläche ist ein entsprechendes Dichtelement, wie beispielsweise eine umlaufende Elastikdichtungen angeordnet. Diese kann flächenhaft ausgestaltet sein, da die Aufsetzfläche 6 in einer Ebene verläuft. Dadurch ist ein dauerhaftes Verschließen und Dichten gewährleistet.

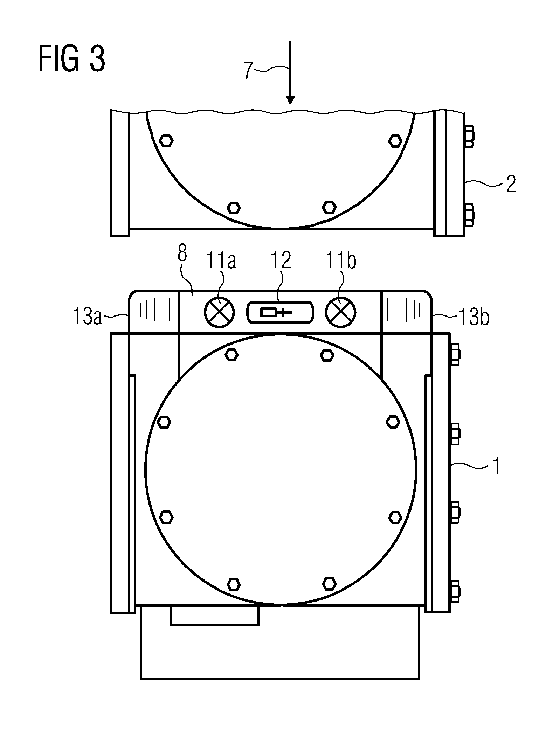

In der Figur 3 ist das aus den Figuren 1 und 2 bekannte Kapselungsgehäuse 1 dargestellt, wobei nunmehr eine ebene Front 8 zum Betrachter hin gewandt ist. Hinter der ebenen Front 8 sind Anzeigeelemente 11a, 11b angeordnet. Diese Anzeigeelemente 11a, 11b können beispielsweise die Lage eines Schaltkontaktes abbilden oder den Zustand von Einbauten, beispielsweise einer elektromotorischen Antriebseinrichtung abbilden. Durch entsprechende optisch durchlässige Einsätze in der ebenen Front 8 sind die Anzeigeelemente 11a, 11b von außen ablesbar. Weiterhin ist in der Figur 3 an der ebenen Front 8 eine Abdeckplatte 12 erkennbar. Die Abdeckplatte 12 deckt in der ebenen Front 8 vorgesehene Ausnehmungen ab, hinter welchen ein Bedienelement angeordnet ist. Zur Sicherung der Abdeckplatte 12 ist diese mittels eines Schlosses verschließbar.

Zu erkennen ist in der Figur 3 weiterhin, dass sich beiderseits der ebenen Front 8 Übergangsabschnitte 13a, 13b anschließen. Die Übergangsabschnitte 13a, 13b weisen dabei konkave Wölbungen auf. Somit sind die Ecken der Gehäuseanordnung 3 gebrochen, wobei im Bereich der Übergangsabschnitte 13a, 13b zusätzliches Volumen zur Aufnahme von weiteren Elementen außerhalb der Gehäuseanordnung 3 gegeben ist. Weiterhin wird durch die Übergangsabschnitte 13a, 13b die ebene Front 8 beispielsweise für einen Bediener hervorgehoben. Dadurch wird die Bediensicherheit und Meldesicherheit der Anzeigeelemente 11a, 11b bzw. der Bedienelemente erhöht.

In der Figur 4 ist die Grundfläche 14 in einer Draufsicht dargestellt. Die Grundfläche 14 weist vorteilhafterweise eine ebene Gestalt auf, kann jedoch wie vorliegend auch in Anpassung an das Kapselungsgehäuse 1 eine gewölbte Form aufweisen. Die Figur 4 zeigt in der Draufsicht eine gegengleiche Fläche 16 zu der Aufsetzfläche 6 des Deckels 5. Die gegengleiche Fläche 16 ist frei von Sprüngen und Absätzen. Zu erkennen sind weiterhin die Bereiche, in welchen sich die Übergangsabschnitte 13a, 13b sowie die ebene Front 8 bei aufgesetztem Deckel 5 befinden. Weiterhin ist die Grundfläche 14 von einer Antriebswelle 15 durchsetzt. Die Antriebswelle 15 dient dem Bewegen von bewegbaren Kontaktstücken, welche im Innern des Kapselungsgehäuses 1 befindlich sind. Dazu ist als ein Einbau 10 eine elektromotorische Antriebseinrichtung vorgesehen. Der Schaltzustand der elektromotorische Antriebseinrichtung und der entsprechend daran gekoppelten bewegbaren Kontaktstücke ist über die im Bereich der ebenen Front 8 liegenden Anzeigeelemente 11a, 11b ablesbar. Weiterhin kann der elektromotorische Antrieb über Bedienelemente, welche hinter der Abdeckplatte 12 liegen, bedient werden.

## Patentansprüche

1. Gehäuseanordnung (3) mit einer von einer oder mehrere Seitenwänden (4,8) begrenzten Grundfläche (14), die ein abnehmbarer Deckel (5) zumindest teilweise überspannt,
wobei der Deckel (5) eine Anformung aufweist, welche eine Seitenwand (4, 8) zumindest teilweise bildet und der Deckel (5) eine Aufsetzfläche (6) aufweist, welche in einer Ebene liegt und mit einer Hochachse (7), die von der oder den Seitenwänden (4,8) umgeben ist,
**dadurch gekennzeichnet, dass**
zwischen der Hochachse (7) und der Ebene der Aufsetzfläche (6) ein Winkel (α) kleiner 90° eingeschlossen ist und
durch die Anformung ein Bedienelement und/oder ein Anzeigeelement (11a, 11b) zugänglich sind/ist.

2. Gehäuseanordnung nach Anspruch 1,
**dadurch gekennzeichnet, dass**
die Grundfläche (14) Teil einer gasdichten Barriere eines Schaltanlagenkapselungsgehäuses (1) ist.

3. Gehäuseanordnung (3) nach einem der Ansprüche 1 oder 2,
**dadurch gekennzeichnet, dass**
ein Teil einer Seitenwand (4) stoffschlüssig mit der Grundfläche verbunden ist.

4. Gehäuseanordnung (3) nach einem der Ansprüche 1 bis 3,
**dadurch gekennzeichnet, dass**
die Grundfläche (14) von einer drehbar gelagerten Antriebswelle (15) durchsetzt ist.

5. Gehäuseanordnung (3) nach einem der Ansprüche 1 bis 4,
**dadurch gekennzeichnet, dass**
eine von dem Deckel (5)zumindest teilweise gebildete Seitenwand eine ebene Front (8) aufweist, an deren Enden zum Übergang auf anschließende Seitenwände sich jeweils Übergangsabschnitte (13a, 13b) mit konkaven Wölbungen anschließen.

6. Gehäuseanordnung (3) nach einem der Ansprüche 1 bis 5,
**dadurch gekennzeichnet, dass**
auf der Grundfläche Einbauten (10) angeordnet sind, welche über die zur Aufnahme der Aufsetzfläche des Deckels (5) vorgesehene Kontur hinausragen.

7. Gehäuseanordnung (3) nach Anspruch 1 bis 6,
**dadurch gekennzeichnet, dass**
innerhalb der Gehäuseanordnung (3) eine Antriebseinrichtung (10) angeordnet ist.

## Claims

1. Housing arrangement (3) having a base surface (14) which is delimited by one or more side walls (4, 8) and which is at least partially spanned by a removable cover (5), wherein the cover (5) has an integrally formed portion which at least partially forms a side wall (4, 8), and the cover (5) has a bearing surface (6) which lies in one plane, and having a vertical axis (7) which is surrounded by the side wall or side walls (4, 8), **characterized in that** an angle (α) of less than 90° is formed between the vertical axis (7) and the plane of the bearing surface (6), and an operator control element and/or an indicator element (11a, 11b) are/is accessible through the integrally formed portion.

2. Housing arrangement according to Claim 1, **characterized in that** the base surface (14) is part of a gas-tight barrier of a switchgear assembly encapsulation housing (1).

3. Housing arrangement (3) according to either of Claims 1 and 2, **characterized in that** a portion of a side wall (4) is connected to the base surface in a cohesive manner.

4. Housing arrangement (3) according to one of Claims 1 to 3, **characterized in that** a rotatably mounted drive shaft (15) passes through the base surface (14).

5. Housing arrangement (3) according to one of Claims 1 to 4, **characterized in that** a side wall which is at least partially formed by the cover (5) has a flat front (8), transition sections (13a, 13b) with concave curvatures in each case adjoining the ends of the said flat front for transition to adjoining side walls.

6. Housing arrangement (3) according to one of Claims 1 to 5, **characterized in that** internals (10) are arranged on the base surface, the said internals projecting beyond the contour which is provided for receiving the bearing surface of the cover (5).

7. Housing arrangement (3) according to Claims 1 to 6, **characterized in that** a drive device (10) is arranged within the housing arrangement (3).

## Revendications

1. Agencement ( 3 ) de boîtier comprenant une surface ( 14 ) de base qui est délimitée par une ou par plusieurs parois ( 4, 8 ) latérales et qui recouvre au moins en partie un couvercle ( 5 ) pouvant être retiré,
dans lequel le couvercle ( 5 ) a une conformation qui forme au moins en partie une paroi ( 4, 8 ) latérale et le couvercle ( 5 ) a une surface ( 6 ) de pose, qui est dans un plan et ayant un axe ( 7 ) vertical qui est entouré par la ou par les parois ( 4, 8 ) latérales,
**caractérisé en ce qu'**un angle ( α ) entre l'axe ( 7 ) vertical et le plan de la surface ( 6 ) de pose est plus petit que 90 ° et un élément de service et/ou un élément ( 1a, 11b ) d'affichage sont/est accessibles par la conformation.

2. Agencement de boîtier suivant la revendication 1,
**caractérisé en ce que** la surface ( 14 ) de base fait partie d'une barrière étanche au gaz d'un boîtier ( 11 ) de blindage d'une installation de commutation.

3. Agencement de boîtier suivant l'une des revendications 1 ou 2,
**caractérisé en ce qu'**une partie d'une paroi ( 4 ) latérale est reliée à complémentarité de matière avec la surface de base.

4. Agencement de boîtier suivant l'une des revendications 1 à 3,
**caractérisé en ce que** la surface ( 4 ) de base est traversée par un arbre ( 15 ) d'entraînement monté tournant.

5. Agencement de boîtier suivant l'une des revendications 1 ou 4,
**caractérisé en ce qu'**une paroi latérale formée au moins en partie par le couvercle (5) a un front ( 8 ) plan aux extrémités duquel se raccordent, pour la transition à des parois latérales qui se raccordent, des parties ( 13a, 13b ) de transition à courbure concave.

6. Agencement de boîtier suivant l'une des revendications 1 ou 5,
**caractérisé en ce que** sur la surface de base sont montées des pièces ( 10 ) qui dépassent du contour prévu pour la réception de la surface de pose du couvercle ( 5 ).

7. Agencement de boîtier suivant la revendication 1 à 6,
**caractérisé en ce qu'**un dispositif ( 10 ) d'entraînement est disposé à l'intérieur de l'agencement ( 3 ) de boîtier.
